(19) **Europäisches Patentamt**
**European Patent Office**
**Office européen des brevets**

(11) **EP 2 795 138 B1**

(12) **EUROPEAN PATENT SPECIFICATION**

(45) Date of publication and mention
of the grant of the patent:
**23.08.2017 Bulletin 2017/34**

(51) Int Cl.:
*F15B 15/20* (2006.01)    *B60R 21/38* (2011.01)
*F15B 15/19* (2006.01)

(21) Application number: **11877623.6**

(22) Date of filing: **21.12.2011**

(86) International application number:
**PCT/SE2011/051556**

(87) International publication number:
**WO 2013/095225 (27.06.2013 Gazette 2013/26)**

(54) **HOOD LIFTING ARRANGEMENT**

HEBEANORDNUNG FÜR EINE MOTORHAUBE

DISPOSITIF DE SOULÈVEMENT DE CAPOT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.10.2014 Bulletin 2014/44**

(73) Proprietor: **Autoliv Development AB
447 83 Vårgårda (SE)**

(72) Inventors:
• **GÖTSTEN, Henrik
44795 Vårgårda (SE)**
• **AXELSSON, Peter
44730 Vårgårda (SE)**

• **EDHOLM, Jakob
41463 Göteborg (SE)**

(74) Representative: **Sandstedt, Jonas Sven James
WESTPATENT AB
Almekärrsvägen 11
443 39 Lerum (SE)**

(56) References cited:
**EP-A2- 1 795 405      EP-A2- 1 808 606
WO-A1-2004/071821   WO-A1-2007/048484
DE-A1- 10 355 444     DE-U1- 20 214 904
DE-U1- 20 214 904     FR-A1- 2 938 884
GB-A- 2 432 399       US-A1- 2006 218 918
US-A1- 2011 297 471**

## Description

The present invention relates to an actuator for a hood lifting arrangement in a vehicle pedestrian safety system. The actuator comprises a housing and a piston, the piston having a first end and a second end. The piston is adapted to at least partly be positioned in the housing and comprising a piston head which has a cross-sectional area that exceeds the cross-sectional area of at least a part of the piston that follows the piston head in a direction of the piston's displacement after activation of the actuator. The piston head divides the housing in a first part and a second part. The actuator further comprises a pyrotechnic charge arranged to provide an expanding gas pressure which exerts a displacing force on the piston when the actuator is activated. After activation, the piston is displaced in said direction via a first opening in the housing, where the first end faces the direction of the piston's displacement.

It has been observed that if a motor vehicle hits a pedestrian, the bumper of the vehicle often hits the legs or lower torso of the pedestrian. Hence, the legs of the pedestrian will normally be pushed in the travel direction of the vehicle, and the head and upper torso will normally be tilted towards the hood and windscreen of the vehicle. This tilting movement often causes the head or upper torso of the pedestrian to first make contact with the hood and thereafter, if the impact force from the hit is strong enough and the vehicle continues forward, also reach the windscreen.

In order to minimize the damages afflicted to the pedestrian in the event of such an impact, it has been proposed to use some kind of hood lifting arrangements. These arrangements are generally constructed such that the rear part of the hood, i.e. the part closest to the windscreen, is lifted in the event of a collision with a pedestrian. Such arrangements are for example disclosed in WO 2007/067 121 and EP 2 256 007.

The hood will in general provide an efficient, flexible impact energy absorbing structure when a vehicle hits a pedestrian. However, if the hood is not lifted, there is a higher risk that the hood will be deformed to such an extent that hard, non-flexible parts beneath the hood, e. g. an engine block, make contact with the hood and an undesired, stiff impact may be the result from the collision between the pedestrian and the vehicle. In addition, the raising of the rear part of the hood will make the surface of the hood further inclined and contribute to a reduced speed of a body moving towards the windshield. Furthermore, a less acute angle between the windshield and the hood will also contribute to a less severe condition for a person being hit by a vehicle.

Hence, the use of an active safety arrangement for lifting the hood contributes significantly to reduce the risk of damages/injuries for a pedestrian that is hit by a vehicle.

In order to lift the hood, there are several different suggestions of how a hood lifting arrangement shall be designed. One suggestion is to use a piston and a housing where, in the event of actuation, the piston will be pushed to extend out of the housing and thereby cause a lifting action of the hood or bonnet. Such lifting devices are for example disclosed in JP 2008-075739 and US 6,530,449.

DE 20214904U discloses an actuator according to the preamble of claim 1; wherein it discloses an aperture in a piston head, and a stand-alone pin that runs through this aperture. DE 20214904 also discloses a widening of a piston housing through which the piston head runs.

WO 2007/048484 discloses a widening of a piston housing through which the piston head runs.

Even though the above described prior art provides working examples of actuators serving as hood lifters, there is still a desire for improvements of hood lifters with respect to their functionality and reliability.

The object of the present invention is to provide an actuator which in a cost efficient way makes it possible to produce a hood lifter with a reliable functionality, consisting of a minimum of parts.

Said object is obtained by means of an actuator for a hood lifting arrangement in a vehicle pedestrian safety system as defined in claim 1.

Furthermore, during a first period of time directly after activation of the actuator, during which a part of the piston's total displacement takes place, less gas is allowed to pass between the first part of the housing and the second part of the housing via the piston head than during at least a first part of a second period of time. The second period of time follows the first period of time, and during the second period of time at least a part of the rest of the piston's total displacement takes place.

According to an example, the piston head is positioned at the second end.

According to another example, the actuator comprises a sleeve part which is arranged to at least partly surround the piston head, and to interact sealingly with the piston head during the first period of time. By means of this arrangement, the sleeve part and the piston head together provide a seal between the first part of the housing and the second part of the housing during the first period of time.

According to another example, the sleeve part is mounted to the housing such that, during the rest of the piston's total displacement, during the second period of time, the sealing interaction between the sleeve part and the piston head is terminated. In this way, a passage for the gas is provided between the first part of the housing and the second part of the housing.

Furthermore, preferably, the sleeve part comprises a plurality of pin parts that extend in the direction of the piston's displacement. The pin parts fit into corresponding grooves in the piston head. The sealing interaction between the sleeve part and the piston head exists while the pins run in the grooves.

A number of advantages are provided by means of the present invention. Mainly a hood lifter with a reliable functionality, consisting of a minimum of parts, is acquired.

Brief description of the drawings

The present invention will now be described more in detail with reference to the appended drawings, where:

Figure 1      schematically shows a vehicle before activation of a hood lifting actuator;

Figure 2      schematically shows a vehicle after activation of a hood lifting actuator;

Figure 3      schematically shows a first type of actuator, and in accordance with the present invention in a first position;

Figure 4      schematically shows the first type of actuator in a second position;

Figure 5      schematically shows the first type of actuator in a third position;

Figure 6      schematically shows separated parts of a second type of actuator;

Figure 7      schematically shows a second type of actuator in a first position;

Figure 8      schematically shows a second type of actuator in a second position;

Figure 9      schematically shows a second type of actuator in a third position; and

Figure 10     schematically shows a second type of actuator in a fourth position.

Detailed description

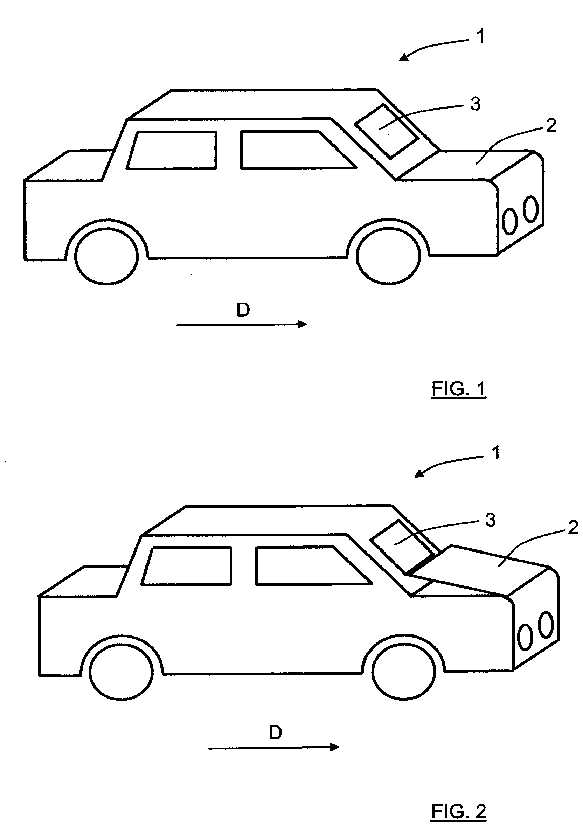

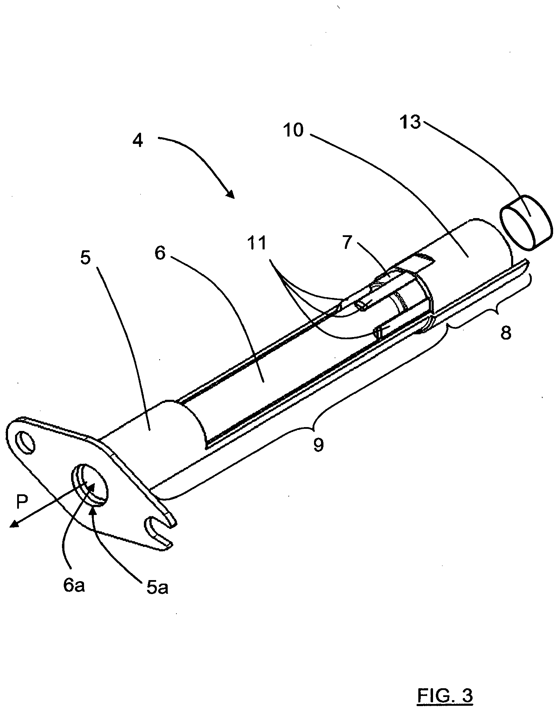

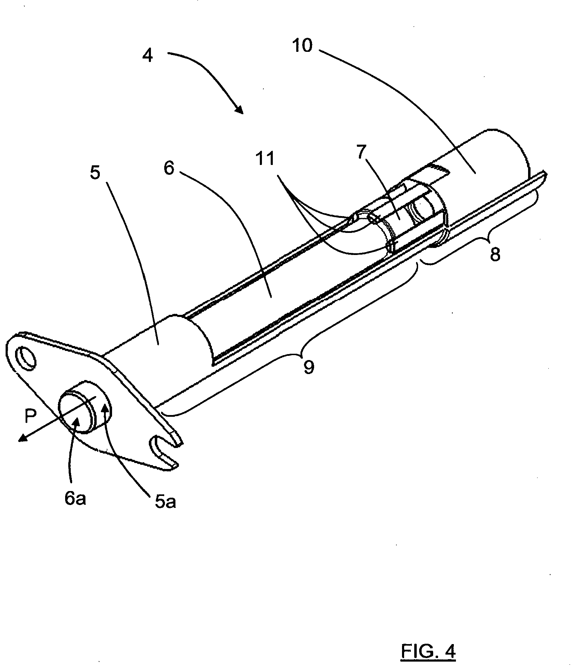

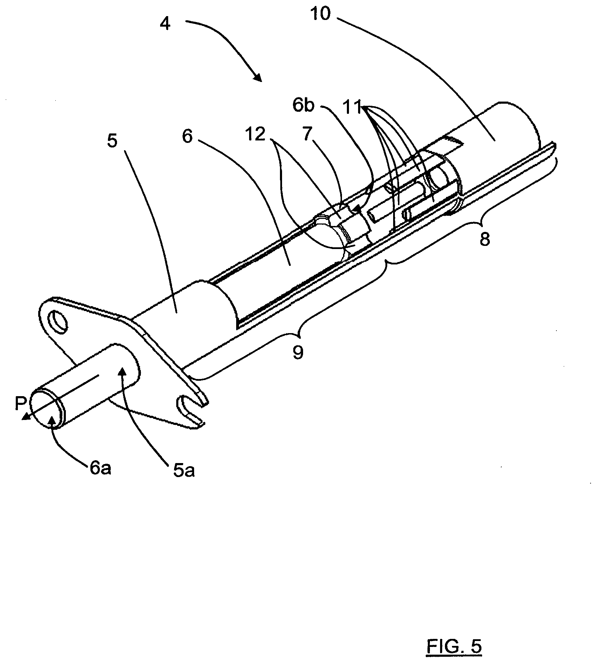

Figure 1 shows a vehicle 1 with a hood 2 and a windscreen 3 in a normal condition. The vehicle 1 has a forward direction of movement that is indicated with an arrow D. In the event of a collision with a pedestrian (not shown), the rear part of the hood 2, i.e. the part closest to the windscreen, is raised as shown in Figure 2.
The hood is raised by means of an actuator that is comprised in a hood lifting arrangement. Figure 3, Figure 4 and Figure 5 show an actuator 4 according to a first example in a normal mounted position, and in two different positions after activation. The actuator 4 comprises a housing 5 which is shown partly broken-up in Figure 3, Figure 4 and Figure 5 in order to more clearly illustrate the parts that are comprised in the actuator 4 and their functionality. In other words, a part of the hosing has been made transparent in said Figures in order to provide a more clear illustration of the present invention.
The actuator 4 further comprises a piston 6 that has a first end 6a and a second end 6b. The piston 6 is shown positioned in the housing 5 such that a part of the piston 6 is in the housing 5 and the rest of the piston protrudes, or is arranged to protrude, from the housing 5 via an opening 5a and is attached to a not shown linkage or similar for hood lifting.
The piston 6 further comprises a piston head 7 positioned at the second end 6b of the piston 6, the piston head 7 having a cross-sectional area that exceeds the cross-sectional area of the rest of the piston shown in Figure 3. The piston head 7 divides the housing in a first part 8 and a second part 9, where the extensions of the first part 8 and the second part 9 change with the movement of the piston head 7 after activation of the actuator 4.
The actuator 4 further comprises a pyrotechnic charge 13 arranged to provide an expanding gas pressure which exerts a displacing force on the piston 6 when the actuator 4 is activated, such that the piston is displaced in a direction P via the opening 5a in the housing 5. Then the first end 6a faces the direction P of the piston's displacement.
The actuator 4 further comprises a sleeve part 10 which is arranged to initially surround the piston head,
[0025]    The sleeve part comprises a plurality of pin parts 11 that extend in the direction P of the piston's displacement, which pin parts 11 fit into corresponding grooves 12 in the piston head 6, a sealing interaction between the sleeve part 10 and the piston head 7 existing while the pins 11 are positioned in the grooves 12.
The sleeve part 10 may for example be made out of plastic, such as polyamide, or out of metal, such as zinc, or a combination.
According to the present invention, during a first period of time $t_1$, directly after activation of the actuator, during which a part of the piston's total displacement takes place, no gas is allowed to pass from the first part of the housing to the second part of the housing via the piston head. In Figure 4, the actuator 4 has been activated and the piston 6 is moving during the first period of time $t_1$. Furthermore, during a second period of time $t_2$, following the first period of time $t_1$, a certain amount of gas is allowed to pass from the first part 8 of the housing 5 to the second part 9 of the housing 9 via the piston head 7. During the second period of time $t_2$, the rest of the piston's total displacement takes place. In Figure 5, the piston 6 is moving during the second period of time $t_2$.
During the first period of time $t_1$, the pin parts 11 run into the corresponding grooves 12 in the piston head 6 and interact sealingly with each other, such that the sleeve part 10 and the piston head 7 together provide a seal between the first part 8 of the housing 5 and the second part 9 of the housing 5 during the first period of time $t_1$.
The sleeve part 10 is mounted to the housing 5 such that, during the second period of time $t_2$, the sealing

interaction between the sleeve part 10 and the piston head 7 is terminated since the piston head 7 then disengages the pin parts 11. Via the grooves 12 in the piston head 7, a passage for the gas is provided between the first part 8 of the housing 5 and the second part 9 of the housing 5.

By means of the above arrangement, the force acting at the piston 6 is relatively high initially, during the first period of time $t_1$, which allows shearing pins in the hinge arrangement (not shown) upon which the moving piston acts, to be cut. The reason for having such shearing pins is to avoid undesired lifting of the hood. It is also desired to obtain a quick positioning of the hood in its raised position in the case of a collision, for example around 10-30 ms.

It should be understood that instead of shearing pins which break, other types of arrangements to avoid undesired lifting of the hood are possible, such as for example one or more hook elements which are guided away from a locked position in the case of a collision.

The reduced force acting at the piston 6 during the second period of time $t_2$ results in a reduced risk for over-swing of the hood.

Furthermore, the piston-head 7 has a cross-sectional area that exceeds the cross-sectional area of the rest of the piston, and when undeployed, the piston head 7 is fitted in the sleeve part 10. Then the piston 6 is isolated from the housing 5 by means of a play, which for example reduces noise, wear of surface treatment and possible corrosion.

Also, the arrangement according to the present invention results in a reduced sensitivity to manufacturing tolerances with maintained repeatability regarding lifting force.

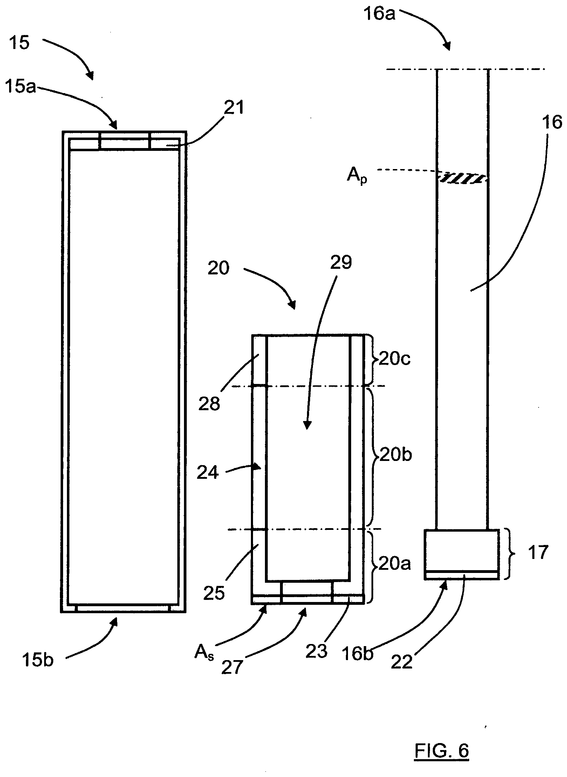

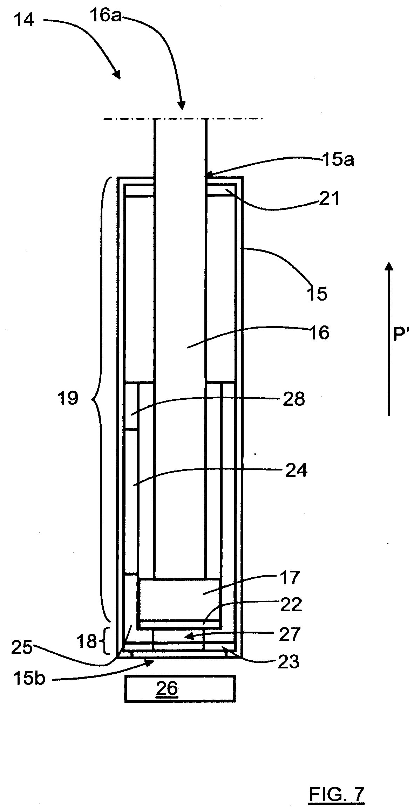

Figure 6, Figure 7, Figure 8, Figure 9 and Figure 10 show an actuator 14 according to a second example, not being a part of the present inventionin a separated part view, in a normal mounted position, and in three different positions after activation. The actuator 14 comprises a housing 15 which is shown partly broken-up in Figure 6-10 in order to more clearly illustrate the parts that are comprised in the actuator 14 and their functionality. In other words, a part of the hosing 15 has been made transparent in said Figures in order to provide a more clear illustration of the present invention according to the second example.

The actuator 14 comprises a piston 16 that has a first end 16a and a second end 16b. The piston 16 is shown positioned in the housing 15 such that a part of the piston 16 is in the housing 15 and the rest of the piston protrudes from the housing 15 via a first opening 15a and is attached to a not shown linkage or similar for hood lifting.

The piston 16 further comprises a piston head 17 positioned at the second end 16b of the piston 16, the piston head 17 having a cross-sectional area $A_h$ that exceeds the cross-sectional area $A_p$ of the rest of the piston shown in Figure 6. The piston head 17 divides the housing 15 in a first part 18 and a second part 19, where the extensions of the first part 18 and the second part 19 change with the movement of the piston head 17 after activation of the actuator 14.

The actuator 14 further comprising a pyrotechnic charge 26 arranged to provide an expanding gas pressure which exerts a displacing force on the piston 16 when the actuator 14 is activated, such that the piston is displaced in a direction P' via the first opening 15a in the housing 15. Then the first end 16a faces the direction P' of the piston's displacement. The pyrotechnic charge 26 is in communication with the interior of the housing 15 via a second opening 15b.

The actuator 14 further comprises a sleeve part 20 which is arranged to initially surround the piston head, the sleeve part 20 constituting an auxiliary piston which is movable with respect to the housing 15 and comprising a partly enclosed space 29 in which the piston 16 is able to move.

The housing 15 comprises a housing top sealing 21, the piston 16 comprises a piston sealing 22 at the second end 16b, and the sleeve part 20 comprises a sleeve part sealing 23.

The housing top sealing 21 is of annular shape, allowing movement of the piston 16 through the housing top sealing 21 in a sealed manner. The piston sealing 22 provides a sealing between the piston head's circumference and the sleeve part 20. The sleeve part sealing 23 is annular, and provides a sealing between the sleeve part 20 and the housing 15. The annular shape defines an opening 27 into the sleeve part 20 through which the release gases may reach the piston head 17 after activation.

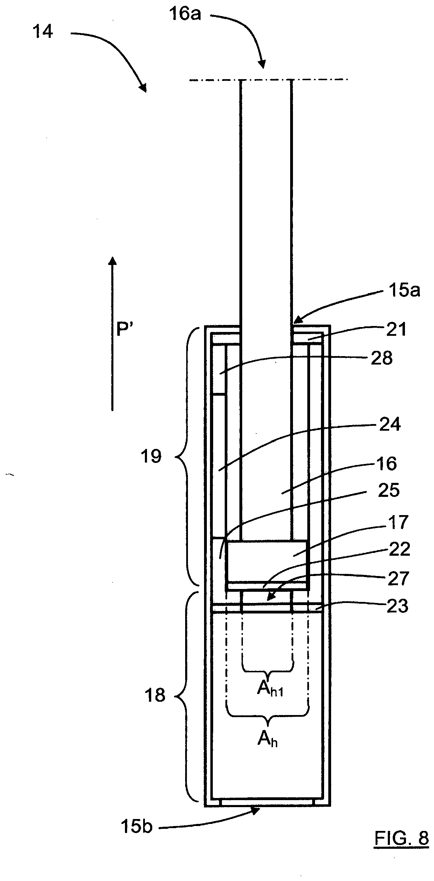

The sleeve part 2 0 is movable with respect to the housing 15 in the direction P' of the piston's displacement. During a first part $t_{1a}$' of a first period of time $t_1$', directly after activation of the actuator 14, the sleeve part 20 is displaced together with the piston 16 in the housing 15 until the sleeve part 20 is halted at the first opening 15a in the housing 15, as illustrated in Figure 8 where the activated pyrotechnic charge not is present any more. During the first part $t_{1a}$' of the first period of time $t_1$', a first force $F_1$ acting on the piston equals the pressure p times the sum of area $A_s$ of the sleeve part 20 at the sleeve part sealing 23 and the area $A_h$ of the part of the piston head 17 that is subject to the released gas, in other words:

$$F_1 = p * (A_s + A_{h1}).$$

The first opening 15a, comprising the housing top sealing 21, has a size that only allows the piston 16 to pass, but retains the sleeve part 20. In this way, during a second part $t_{1b}$' of the first period of time $t_1$', and also during a second period of time $t_2$', as well as during a third period of time $t_3$', the third period of time $t_3$' following the second period of time $t_2$', only the piston 16 is displaced, moving inside the sleeve part 20.

During the second part $t_{1b}'$ of the first period of time $t_1'$, the piston 16 is displaced in a sealed interaction with the sleeve part 20. Then a the second force $F_2$ acting on the piston equals the pressure p times the area $A_h$ of the piston head 17 at the piston sealing 22, in other words:

$$F_2 = p \star A_h.$$

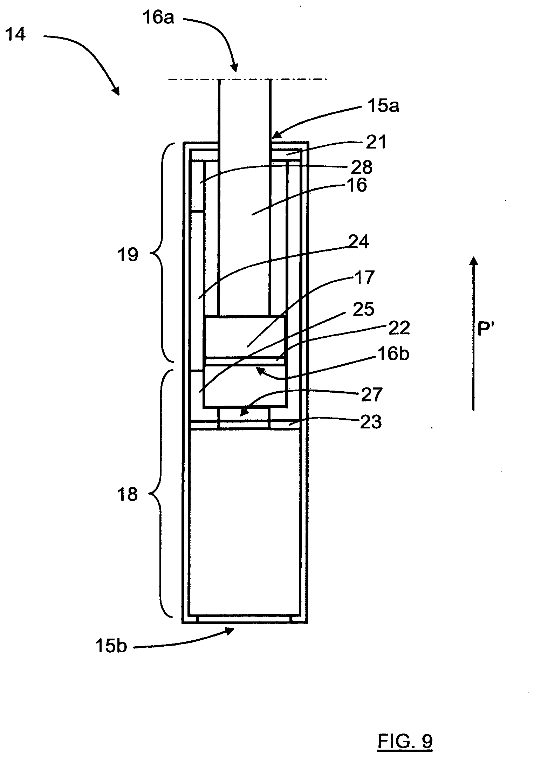

During the second period of time $t_2'$, the sealing interaction between the sleeve part 20 and the piston head 17 is terminated such that a passage for the gas is provided between the first part 18 of the housing 15 and the second part 19 of the housing 15, as illustrated in Figure 9. This is possible since the sleeve part 20 comprises a slot opening 24, through which the gas may pass when the piston head has cleared a wall part 25 of the sleeve part that precedes the slot opening 24. Then a the third force $F_3$ acting on the piston equals the pressure p times the area $A_p$ of the rest of the piston, in other words:

$$F_2 = p \star A_p.$$

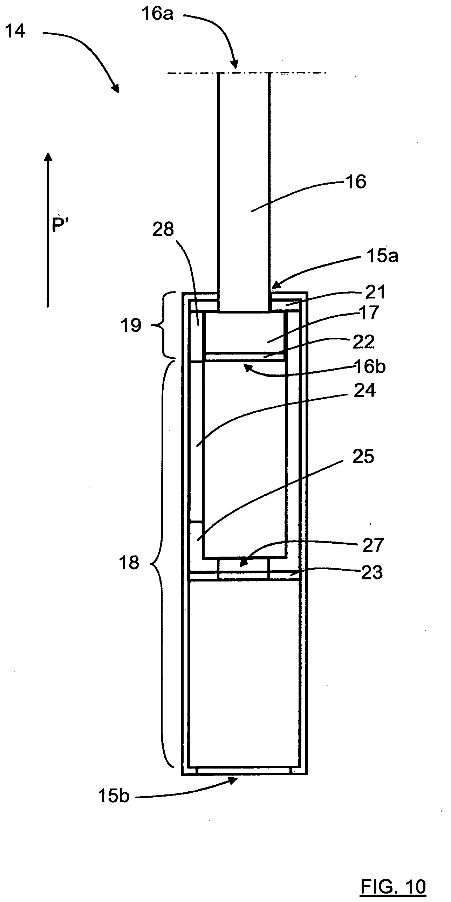

During the third period of time $t_3'$, the piston 16 is again displaced in a sealed interaction with the sleeve part 20 until it is halted in its displacement in said direction P', as illustrated in Figure 10. This is possible since the piston head then has passed the slot opening 24.

The sleeve part comprises a first part 20a where the piston head 17 moves in a sealed manner, being in contact with wall part 25 of the sleeve part 20 around its circumference. The sleeve part 20 comprises a second part 20b with the slot opening 24, where the piston head 17 only is in contact with the sleeve part 20 around a part its circumference. As stated above, said passage for the gas is provided by means of the slot opening 24. The sleeve part 20 also comprises a third part 20c after the slot opening 24 has ended in said direction P'. Here, another wall part 28 of the sleeve part 20 contacts the piston head 17 around its circumference.

The present example is not limited to the above, but may vary freely within the scope of the appended claims. For example, the piston head 7, 17 does not need to be positioned at the second end 6b, 16b. Furthermore, the rest of the piston 6, 16 may not have the same shape, but the piston head 7, 17 has a cross-sectional area that exceeds the cross-sectional area of at least a part of the piston 6, 16 that follows the piston head 7, 17 in the direction P, P' of the piston's displacement after activation of the actuator 4, 14.

In the first example, other types of sleeve parts and piston heads are possible, but according to the invention it is necessary to have pin parts 11 which fit into corresponding grooves 12 in the piston head 7. When pin parts 11 and corresponding grooves 12 are used, the number may vary, but there should be at least one pin part and one corresponding groove.

The gas may pass both ways, depending on the gas pressure on the different sides of the piston head 7, 17. It should be noted that, in the second example, there may be a controlled return of the hood when a person hits the hood, such that the return of the hood meets an increased resistance the closer the hood comes to the initial position. The resistance increases in the steps described for the movement directly after activation, but in the reversed order.

The sleeve parts 10, 20 may for example be in the form of bushings.

The term pedestrian generally relates to persons travelling relatively unprotected such as for example roller-skaters, bicyclists and motorcyclists.

When the piston head seals the first part 8, 18 of the housing 5, 15 and the second part 9, 19 of the housing 5, 15, there may practically be a slight leakage. With this in mind, generally, during the first period of time $t_1$, $t_1'$, less gas is allowed to pass between the first part 8, 18 of the housing 5, 15 and the second part 9, 19 of the housing 5, 15 via the piston head 7, 17 than during at least a first part of a second period of time $t_2$, $t_2'$ $t_1'$).

In the first example, the rest of the piston's displacement takes place during the second period of time $t_2$. In the second example, only a part of the rest of the piston's displacement takes place during the second period of time $t_2'$.

## Claims

1. An actuator (4) for a hood lifting arrangement in a vehicle pedestrian safety system, the actuator (4) comprising a housing (5) and a piston (6), the piston (6) having a first end (6a) and a second end (6b), the piston (6) being adapted to at least partly be positioned in the housing (5) and comprising a piston head (7) which has a cross-sectional area that exceeds the cross-sectional area of at least a part of the piston (6) that follows the piston head (7) in a direction (P) of the piston's displacement after activation of the actuator (4), the piston head (7) dividing the housing (5) in a first part (8) and a second part (9), the actuator (4) further comprising a pyrotechnic charge (13) arranged to provide an expanding gas pressure which exerts a displacing force on the piston (6) when the actuator (4) is activated, such that the piston (6) is displaced in said direction (P) via a first opening (5a) in the housing (5), the first end (6a) facing the direction (P) of the piston's displacement, where, during a first period of time $(t_1)$ directly after activation of the actuator, during which a part of the piston's total displacement takes place, less gas is allowed to pass between the first part (8) of the housing (5) and the second part (9) of the housing (5) via the piston head (7, 17) than during at least a first part of a second period of time ($t_2$), following the first period of time ($t_1$), during which second period of time ($t_2$) at least a part of the rest of the piston's total displacement takes place **characterised in that** a sleeve part (10) comprised in the actuator (4) comprises at least one pin part (11) that extends in the direction (P) of the piston's displacement, where said at least one pin part (11) fits into at least one corresponding groove (12) in the piston head (7), where a sealing interaction between the sleeve part (10) and the piston head (7) exists while said at least one pin part (11) runs in at said at least one corresponding groove (12).

**2.** An actuator according to claim 1, **characterised in that** the piston head (7) is positioned at the second end (6b).

**3.** An actuator according to any one of the claims 1 or 2, **characterised in that** the sleeve part (10) is arranged to at least partly surround the piston head (7), and to interact sealingly with the piston head during the first period of time ($t_1$), such that the sleeve part (10) and the piston head (7) together provide a seal between the first part (8) of the housing (5) and the second part (9) of the housing (5) during the first period of time ($t_1$).

**4.** An actuator according to claim 3, **characterised in that** the sleeve part (7) is mounted to the housing (5) such that, during the rest of the piston's total displacement, during the second period of time ($t_2$), the sealing interaction between the sleeve part (10) and the piston head (7) is terminated such that a passage for the gas is provided between the first part (8) of the housing (5) and the second part (9) of the housing (5).

**5.** An actuator according to any one of the previous claims, **characterised in that** the sleeve part comprises a plurality of pin parts (11) that fit corresponding grooves (12) in the piston head (7).

## Patentansprüche

**1.** Stellantrieb (4) für eine Hebeanordnung für eine Motorhaube in einem Fußgängerschutzsystem eines Fahrzeugs, wobei der Stellantrieb (4) ein Gehäuse (5) und einen Kolben (6) umfasst, wobei der Kolben (6) ein erstes Ende (6a) und ein zweites Ende (6b) aufweist, wobei der Kolben (6) so ausgelegt ist, dass er zumindest teilweise in dem Gehäuse (5) platziert ist, und einen Kolbenboden (7) umfasst, der eine Querschnittsfläche aufweist, die größer ist als die Querschnittsfläche von zumindest einem Teil des Kolbens (6), der dem Kolbenboden (7) in einer Richtung (P) der Kolbenverdrängung nach Aktivierung des Stellantriebs (4) folgt, wobei der Kolbenboden (7) das Gehäuse (5) in einen ersten Teil (8) und einen zweiten Teil (9) unterteilt, wobei der Stellantrieb (4) ferner einen pyrotechnischen Satz (13) umfasst, der so angeordnet ist, dass er einen Druck eines sich entspannenden Gases liefert, der eine Verdrängungskraft auf den Kolben (6) ausübt, wenn der Stellantrieb (4) aktiviert ist, sodass der Kolben (6) in der Richtung (P) über eine erste Öffnung (5a) im Gehäuse (5) verschoben wird, wobei das erste Ende (6a) der Richtung (P) der Kolbenverdrängung zugewandt ist, wobei während eines ersten Zeitraums ($t_1$) unmittelbar nach Aktivierung des Stellantriebs, während dessen ein Teil der Gesamtkolbenverdrängung stattfindet, weniger Gas zwischen dem ersten Teil (8) des Gehäuses (5) und dem zweiten Teil (9) des Gehäuses (5) über den Kolbenboden (7, 17) strömen darf als während zumindest eines ersten Teils eines zweiten Zeitraums ($t_2$), der auf den ersten Zeitraum ($t_1$) folgt, wobei während des zweiten Zeitraums ($t_2$) zumindest ein Teil der übrigen Gesamtkolbenverdrängung stattfindet, **dadurch gekennzeichnet, dass** ein Hülsenteil (10), der in dem Stellantrieb (4) enthalten ist, mindestens einen Stiftteil (11) umfasst, der in der Richtung (P) der Kolbenverdrängung verläuft, wobei der mindestens eine Stiftteil (11) in mindestens eine entsprechende Nut (12) im Kolbenboden (7) passt, wobei eine dichtende Wechselwirkung zwischen dem Hülsenteil (10) und dem Kolbenboden (7) besteht, während der mindestens eine Stiftteil (11) in der mindestens einen entsprechenden Nut (12) läuft.

**2.** Stellantrieb nach Anspruch 1, **dadurch gekennzeichnet, dass** sich der Kolbenboden (7) am zweiten Ende (6b) befindet.

**3.** Stellantrieb nach Anspruch 1 oder 2, **dadurch gekennzeichnet, dass** der Hülsenteil (10) so angeordnet ist, dass er zumindest teilweise den Kolbenboden (7) umgibt und während des ersten Zeitraums ($t_1$) derart abdichtend mit dem Kolbenboden in Wechselwirkung steht, dass der Hülsenteil (10) und der Kolbenboden (7) zusammen eine Dichtung zwischen dem ersten Teil (8) des Gehäuses (5) und dem zweiten Teil (9) des Gehäuses (5) während des ersten Zeitraums ($t_1$) bereitstellen.

**4.** Stellantrieb nach Anspruch 3, **dadurch gekennzeichnet, dass** der Hülsenteil (7) an dem Gehäuse (5) derart montiert ist, dass während der übrigen Gesamtkolbenverdrängung, während des zweiten Zeitraums ($t_2$), die dichtende Wechselwirkung zwischen dem Hülsenteil (10) und dem Kolbenboden (7) derart beendet wird, dass ein Durchlass für das Gas zwischen dem ersten Teil (8) des Gehäuses (5) und dem zweiten Teil (9) des Gehäuses (5) geschaffen wird.

**5.** Stellantrieb nach einem der vorhergehenden Ansprüche, **dadurch gekennzeichnet, dass** der Hülsenteil eine Vielzahl von Stiftteilen (11) umfasst, die mit entsprechenden Nuten (12) im Kolbenboden (7) zusammenpassen.

## Revendications

**1.** Actionneur (4) destiné à un dispositif de soulèvement de capot dans un système de sécurité pour piéton d'un véhicule, l'actionneur (4) comprenant un boîtier (5) et un piston (6), le piston (6) comportant une première extrémité (6a) et une seconde extrémité (6b), le piston (6) étant adapté pour être au moins partiellement positionné dans le boîtier (5) et comprenant une tête de piston (7), qui présente une surface de section transversale qui dépasse la surface de section transversale d'au moins une partie du piston (6) qui suit la tête de piston (7) dans une direction (P) du déplacement de piston après l'activation de l'actionneur (4), la tête de piston (7) divisant le boîtier (5) en une première partie (8) et une seconde partie (9), l'actionneur (4) comprenant en outre une charge pyrotechnique (13) agencée pour fournir une pression de gaz en expansion qui exerce une force de déplacement sur le piston (6) quand l'actionneur (4) est activé, de telle sorte que le piston (6) est déplacé dans ladite direction (P) par le biais d'une première ouverture (5a) dans le boîtier (5), la première extrémité (6a) faisant face à la direction (P) du déplacement de piston, moins de gaz étant autorisé à passer entre la première partie (8) du boîtier (5) et la seconde partie (9) du boîtier (5) par le biais de la tête de piston (7, 17) pendant une première période ($t_1$) directement après l'activation de l'actionneur, pendant laquelle une partie du déplacement total du piston se produit, que pendant au moins une première partie d'une seconde période ($t_2$), suivant la première période ($t_1$), pendant laquelle seconde période ($t_2$) au moins une partie du reste du déplacement total du piston se produit, **caractérisé en ce qu'**une partie de manchon (10) comprise dans l'actionneur (4) comprend au moins une partie de tige (11) qui s'étend dans la direction (P) du déplacement de piston, ladite au moins une partie de tige (11) rentrant dans au moins une rainure (12) correspondante dans la tête de piston (7), une interaction d'étanchéification entre la partie de manchon (10) et la tête de piston (7) étant présente tandis que ladite au moins une partie de tige (11) s'étend dans ladite au moins une rainure (12) correspondante.

**2.** Actionneur selon la revendication 1, **caractérisé en ce que** la tête de piston (7) est positionnée sur la seconde extrémité (6b).

**3.** Actionneur selon l'une quelconque des revendications 1 ou 2, **caractérisé en ce que** la partie de manchon (10) est agencée pour au moins partiellement entourer la tête de piston (7), et pour interagir de manière étanchéifiante avec la tête de piston pendant la première période ($t_1$), de telle sorte que la partie de manchon (10) et la tête de piston (7) ensemble créent un joint d'étanchéité entre la première partie (8) du boîtier (5) et la seconde partie (9) du boîtier (5) pendant la première période ($t_1$).

**4.** Actionneur selon la revendication 3, **caractérisé en ce que** la partie de manchon (7) est montée sur le boîtier (5) de telle sorte que, pendant le reste du déplacement total du piston, pendant la seconde période ($t_2$), l'interaction d'étanchéification entre la partie de manchon (10) et la tête de piston (7) est achevée de telle sorte qu'un passage pour le gaz est créé entre la première partie (8) du boîtier (5) et la seconde partie (9) du boîtier (5).

**5.** Actionneur selon l'une quelconque des revendications précédentes, **caractérisé en ce que** la partie de manchon comprend une pluralité de parties de tige (11) qui s'adaptent à des rainures (12) correspondantes dans la tête de piston (7).

FIG. 1

FIG. 2

FIG. 3

FIG. 4

FIG. 5

FIG. 6

FIG. 7

FIG. 8

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007067121 A
- EP 2256007 A
- JP 2008075739 A
- US 6530449 B
- DE 20214904 U
- DE 20214904
- WO 2007048484 A